(19) **Europäisches Patentamt / European Patent Office / Office européen des brevets**

(11) **EP 1 963 118 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(51) Int Cl.:
***B60G 17/056*** (2006.01)

(21) Anmeldenummer: **06805823.9**

(86) Internationale Anmeldenummer:
**PCT/EP2006/009260**

(22) Anmeldetag: **23.09.2006**

(87) Internationale Veröffentlichungsnummer:
**WO 2007/073786 (05.07.2007 Gazette 2007/27)**

(54) **HYDROPNEUMATISCHE ACHSFEDERUNG FÜR FAHRZEUGE**

HYDROPNEUMATIC AXLE SUSPENSION FOR VEHICLES

SUSPENSION HYDROPNEUMATIQUE DE L'ESSIEU DE VEHICULES AUTOMOBILES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.12.2005 DE 102005062246**

(43) Veröffentlichungstag der Anmeldung:
**03.09.2008 Patentblatt 2008/36**

(73) Patentinhaber: **Hydac System GmbH
66280 Sulzbach/Saar (DE)**

(72) Erfinder: **HUTH, Heinz-Peter
66802 Überherrn (DE)**

(74) Vertreter: **Bartels, Martin Erich Arthur
Patentanwälte
Bartels und Partner
Lange Strasse 51
70174 Stuttgart (DE)**

(56) Entgegenhaltungen:
**EP-A- 1 232 882      EP-A- 1 277 604
EP-A1- 0 615 870      EP-A1- 1 508 461
DE-A1- 10 232 769**

**Beschreibung**

Die Erfindung betrifft eine hydropneumatische Achsfederung für Fahrzeuge, insbesondere für deren jeweilige Vorderachse, gemäß der Merkmalsausgestaltung des Oberbegriffes des Patentanspruches 1.

Zum Stand der Technik zählen u. a. auf dem Markt frei erhältliche hydropneumatische Achsfederungen, die über eine so genannte Niveauregelung verfügen. Kommt es zu einer Erhöhung der Achslast, sinkt der Fahrzeugaufbau aufgrund der sich ändernden Drücke im jeweiligen Federungszyl inder ab, und ein Niveauregelventil wird dann so lange betätigt, bis die Kolbenseiten der Federungszylinder als hydropneumatische Stellglieder das ursprüngliche Ausgangsniveau wieder erreicht haben. Bei abnehmender Achslast kann sich der Aufbau entsprechend anheben und das Niveauregelventil verbindet die Kolbenräume der jeweils eingesetzten Federungszylinder so lange mit einer Tankleitung des Fluidsystems, bis das ursprüngliche Niveau wieder einreguliert ist.

In Fortbildung dieses Gedankens ist in der DE 102 32 769 A1 eine hydropneumatische Achsfederung für Fahrzeuge mit stark wechselnden Achslasten vorgeschfagen worden, insbesondere für Vorderachsen an Schleppern mit hydraulischen Federungszylindern, die an hydropneumatische Druckspeicher (Hydrospeicher) angeschlossen sind, einem über eine Niveauregeleinrichtung druckgeregelten Federungskreis der Kolbenräume und einem druckgeregelten Federungskreis der Ringräume, einer über eine Steuerleitung (Load-Sensing-Leitung) durch einen Steuerdruck einstellbaren Load-Sensing-Pumpe zur Druckerzeugung und einem Druckregelventil, welches das Druckniveau im Federungskreis der Ringräume konstant hält. Bei der bekannten Lösung ist das Druckregelventil ein proportional geregeltes Ventil, das von einem Steuerstrom aus einem elektrischen Steuergerät als Steuerelektronik angesteuert wird, um die Achsfederrate in Abhängigkeit von mindestens einem Sensorsignal zwischen konstanten Ringraumdruckniveaus in Teilbereichen proportional zu regeln und bei Bedarf einen wählbaren Konstantdruck zu übersteuern, um eine vorgegebene Achsfederrate darzustellen.

Bei der aufgezeigten bekannten Lösung wird der Ringraumdruck zwischen konstanten Ringraumdruckniveaus zur schnelleren Druckanpassung der Federungsspeicher in Teilbereichen proportional geregelt und ein Proportionalventil hydraulisch so verknüpft, dass eine Load-Sensing-Steuerung mit Druckentlastung für eine Regelpumpe gegeben ist. In Niveaulage werden die beiden Federungskreise der Kolben- und Ringseiten bei der bekannten Lösung mittels zweier druckdichter 2/2-Wege-Ventile leckagefrei auf den eingeregelten Druckniveaus gehalten und beim Niveauregelprozess entsprechend geschaltet, sodass auf die bisher notwendigen speziellen hydraulischen entsperrbaren Rückschlagventile verzichtet werden kann. Neben der selbsttätigen Federratenänderung durch automatische Ringraumdruckregelung besteht die Möglichkeit, bei der bekannten Lösung durch äußeren Eingriff das Druckniveau in den Ringräumen bei Bedarf gewollt zu verändern, um die Federrate den gegebenen Betriebsbedingungen anpassen zu können. Um der Steuerelektronik die aktuellen Druckwerte in den Kolbenräumen der beiden Federungszylinder weitergeben zu können, ist an diese ein Drucksensor angeschlossen, der gegen Überlastung durch ein Druckbegrenzungsventil des fluidischen Systems abgesichert ist.

Mit der bekannten Lösung ist eine an sich preiswerte und geometrisch kleinbauende Lösung für einen Steuerblock einer Achsfederung geschaffen, die ein hohes Maß an Komfort ermöglicht sowie zusätzlich Vorgaben bezogen auf eine individuell einzustellende Federrate. Trotz dieser Vorteile benötigt die bekannte Lösung aber zur Ansteuerung des Systems ein Proportionaldruckregelventil sowie ein Wechselventil, das den jeweils in einem Fluidzweig herrschenden höheren Druck zur Ansteuerung einer Load-Sensing-Pumpe an die Steuerleitung (Load-Sensing-Leitung) weiterzugeben hat. Neben den beiden 2/2-Wege-Ventilen werden also weitere Ventilkomponenten benötigt, die zum einen kostenintensiv sind und zum anderen durch ihren Ausfall die Funktionssicherheit der Achsfedersteuerung infrage stellen können.

Durch die EP-A-1 508 461 ist eine gattungsgemäße hydropneumatische Achsfederung für Fahrzeuge, insbesondere für deren jeweilige Vorderachse, bekannt, die mit mindestens einem Federungszylinder zusammenwirkt, der sowohl mit seiner Ringseite als auch mit seiner Kolbenseite an einen Hydrospeicher angeschlossen ist, der mittels einer ihm zuordenbaren Ventileinheit von einer Steuerelektronik ansteuerbar ist, wobei die Ringseite des Federungszylinders an einen Druckwertaufnehmer angeschlossen ist, der seine Druckmeßwert an die Steuerelektronik weitergibt, wobei der ringseitige Druckwertaufnehmer an die Ausgangsseite der Ventileinheit angeschlossen ist, die der Ringseite des Federungszylinders zuordenbar und an die Ringseite des Federungszylinders angeschlossen ist, und wobei die Ausgangsseite der weiteren Ventileinheit an die kolbenseite des zugeordenbaren Federungszylinders angeschlossen ist.

Bei der bekannten Lösung läßt sich das zweite oder weitere Schaltventil als Ventileinheit durch elektrische Signale der Steuerelektronik zwischen einer Durchflußstellung und einer Sperrstellung schalten, in der gewährleistet ist, dass keine Flüssigkeit in unbeabsichtigter Weise von einer Speisepumpe in den "Federkreis" gelangt. Ein zusätzlich vorgesehenes Rückschlagventil, das das zweite oder weitere Schaltventil mit der Kolbenseite des jeweiligen Federungszylinders verbindet, sperrt in entgegengesetzter Weise wie das zweite Schaltventil, um dergestalt eine Leckage zu unterbinden, wenn der Druck in der Zylinderraumseite des "Federkreises" größer ist als der Druck in der Versorgungsleitung, die zu einer hydraulischen Speisepumpe als Versorgungsquelle führt. Die dahingehend beschriebene Ventilanordnung dient bei der bekannten Lösung zur Niveauregulierung.

Zur Einstellung des Ringraumdruckes dienen bei der bekannten Federungseinrichtung wiederum ein elektrisch einstellbares Proportionaldruckregelventil nebst einer Blende sowie ein elektrisch schaltbares Magnetventil als erste Ventileinheit. Die dahingehenden Teile sind in Hintereinanderanordnung geschaltet, wobei die als Magnetventil ausgebildete erste Ventileinheit mit einer ringraumseitigen Hydraulikleitung in Verbindung steht und das Proportionaldruckregelventil ermöglicht eine wahlweise Verbindung mit der genannten Speisepumpe oder mit einem Tankanschluß, um die dahingehende Verbindung auf Umgebungsdruck zu schalten. Eine direkte fluidführende Verbindung zwischen den beiden genannten Ventileinheiten ist demgemäß bei der bekannten Lösung nicht vorgesehen.

Ausgehend von diesem Stand der Technik liegt der Erfindung die Aufgabe zugrunde, unter Beibehalten der Vorteile der bekannten Lösungen diese dahingehend weiter zu verbessern, dass zur Reduzierung der Kosten und zur Erhöhung der Funktionssicherheit auf zusätzliche Ventile verzichtet werden kann. Eine dahingehende Aufgabe löst eine hydropneumatische Achsfederung mit den Merkmalen des Patentanspruches 1 in seiner Gesamtheit.

Dadurch, dass gemäß dem kennzeichnenden Teil des Patentanspruches 1 die Eingangsseite der Ventileinheit über eine Verbindungsleitung an die Eingangsseite der weiteren Ventileinheit angeschlossen ist und dass in die Verbindungsleitung zwischen die beiden Ventileinheiten eine Load-Sensing-Leitung einmündet, kann gegenüber den bekannten Lösungen sowohl auf ein Wechselventil als auch auf ein Proportionaldruckregelventil verzichtet werden, was die Herstell- und Wartungskosten senken hilft. Die eigentliche Ansteuerung geschieht mit vorzugsweise handelsüblichen 2/2-Wege-Ventilen, die eine kostengünstige Realisierung der Schaltung ermöglichen und in hohem Maße als funktionssicher gelten.

Bei der bekannten gattungsgemäßen Lösung dient das Proportionaldruckregelventil zur Einstellung des ringseitigen Druckes, wobei bei jeder Aktivierung der Niveauregulierung auch der ringseitige Druck am Federungszylinder neu eingestellt wird mit der Folge, dass insoweit ungewollt vorhandene Leckageströme durch zusätzliche Ventile, wie ein Rückschlagventil, zu unterbinden sind, was aber bereits aufgrund der Vielzahl an eingesetzten Ventilen und Ventil komponenten nicht immer zum gewünschten Erfolg führt.

Bei der erfindungsgemäßen Auslegung der Federung beruht bei vergleichbarer Federungscharakteristik diese auf einem konstanten Druck auf der Ringseite des Federungszylinders in der jeweiligen Niveauposition. Insoweit ist dann gegenüber den bekannten Lösungen eine Korrektur des ringseitigen Druckes nicht erforderlich. Nur bei einer Änderung der Federungscharakteristik wird kurzfristig der ringseitige Druck verändert, sodass insoweit weniger Leckageverluste entstehen. Auch ist keine Anpassung der Hydraulik auf unterschiedliche Ringdrücke notwendig, da die ringseitigen Drücke als Parameter in der Software der Steuerungselektronik entsprechend "eingestellt" sind.

Neben den sonstigen Vorteilen, die sich aus einer reduzierten Bauteileanzahl an Steuer und Schaltventilen ergibt, ist es mit der erfindungsgemäßen Lösung möglich, den Vorspanndruck $p_0$ in den Hydrospeichern (hydroppneumatische Speicher) zu überprüfen, sodass eine regelmäßige Prüfung mit dem ansonsten notwendigen messtechnischen Aufwand entfallen kann. In Abhängigkeit der Betriebsdauer der eingesetzten Speicher sowie deren Ansteuerhäufigkeit gelangt jedenfalls Arbeitsgas von der Gasseite des Speichers auf die Fluidseite desselben und die damit einhergehenden Verluste, die zu einer Reduzierung des Vorspanndruckes po beim Speicher führen, beeinflussen nachteilig das Arbeitsvermögen der gesamthydraulischen Anlage. Nach dem erfindungsgemäßen Ansatz wird das Hydrauliksystem zunächst drucklos geschaltet, und sobald ein Volumenstrom zu einem Hydrospeicher geführt wird, springt der Druck auf den Vorspanndruck po des Hydrospeichers an und steigt dann weiter entsprechend der Charakteristik dieses Speichers. Dies gilt insbesondere, wenn der Volumenstrom dem unteren Speicher, also dem ringseitigen Speicher zugeführt wird, und wird bei der realisierten Schaltung dem oberen oder kolbenseitigen Speicher Volumenstrom zugeführt, werden beide Hydrospeicher für einen Federungszylinder gleichzeitig geprüft.

Bei einer besonders bevorzugten Ausführungsform der hydropneumatischen Achsfederung ist ein Druckwertaufnehmer auch auf der Kolbenseite des jeweiligen Federungszylinders vorgesehen, sodass insoweit eine lastabhängige Einstellung der Federungscharakteristik möglich ist. Ein Wegmesssensor für die Kolbenstangeneinheit eines Federungszylinders erleichtert der Steuerungselektronik die gewünschte Niveauregulierung.

Weitere vorteilhafte Ausführungsform der erfindungsgemäßen Achsfederung sind Gegenstand der sonstigen Unteransprüche.

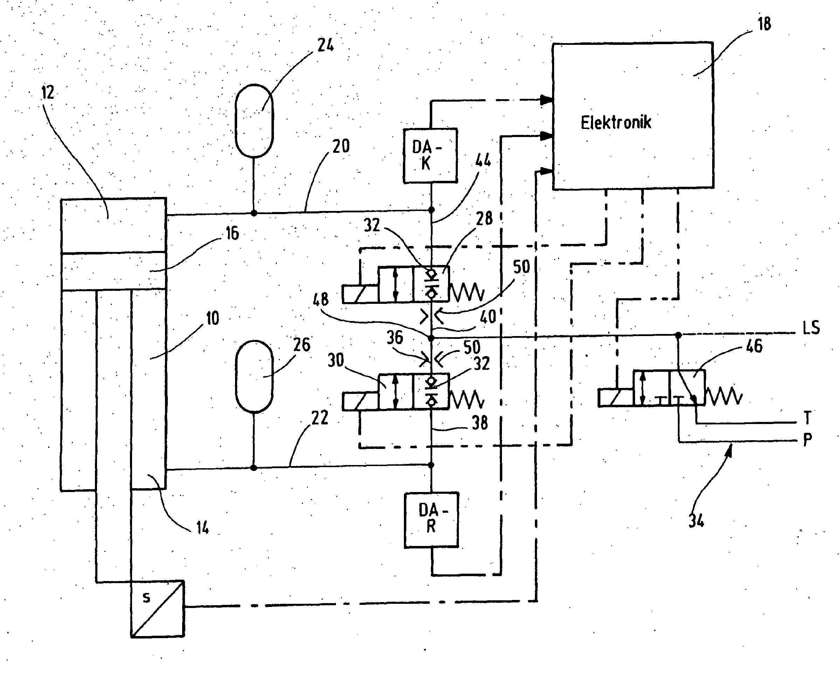

Im folgenden wird die erfindungsgemäße hydropneumatische Achsfederung anhand eines Ausführungsbeispieles nach der Zeichnung näher erläutert. Dabei zeigt die einzige Figur in nicht maßstäblicher und prinzipieller Darstellung den Grundaufbau der Schaltung in der Art eines Blockschaltbildes.

Die in der Figur gezeigte hydropneumatische Achsfederung für Fahrzeuge ist insbesondere für deren jeweilige Vorderachse (nicht näher dargestellt) vorgesehen. Die dahingehende Vorderachse wirkt mit mindestens einem Federungszylinder 10 zusammen, wobei mehrere, meistens zwei, Federungszylinder 10 einer Achse des Fahrzeuges zugeordnet werden. Der einfacheren Darstellung wegen wird aber die vorliegende hydropneumatische Achsfederung nur bezogen auf einen Federungszylinder 10 näher erläutert. Der Federungszylinder 10 weist eine Kolbenseite 12 sowie eine Ringseite 14 auf. Die genannten Seiten 12, 14 sind über eine übliche Kolbenstangeneinheit 16 voneinander getrennt. Die jeweilige Position der Kolbenstangeneinheit 16 lässt sich über ein Wegmesssystem s erfassen, dessen Messwerte an eine Steuerelektronik 18 weitergeleitet werden.

Sowohl die Kolbenseite 12 als auch die Ringseite 14 sind über hydraulische Zufuhrleitungen 20, 22 an einen Hydrospeicher 24, 26 angeschlossen, der in der Fachsprache auch mit hydropneumatischer Speicher, Akkumulator oder dergleichen bezeichnet wird. Die in der Figur gezeigten Hydrospeicher 24, 26 sind nur prinzipiell dargestellt; sind jedoch üblicher Bauart. Insbesondere erstreckt sich innerhalb des Speichergehäuses ein Trennelement, beispielsweise in Form einer elastisch nachgiebigen Fluidmembran, die einen Gasvorratsraum von einem Fluidraum trennt, der fluidführend an die ihm jeweils zuordenbare Leitung 20, 22 angeschlossen ist. An das Ende der jeweiligen Zuführleitung 20, 22 ist ein Druckwertaufnehmer Kolbenseite DA-K sowie Druckwertaufnehmer Ringseite DA-R angeschlossen, die die gemessenen Druckwerte an die Steuerelektronik 18 weitergeben.

Ferner sind für die erfindungsgemäße hydropneumatische Achsfederung zwei Ventileinheiten 28, 30 vorgesehen, die in der Art von 2/2-WegeVentilen ausgebildet von der Steuerelektronik 18 betätigbar sind. Dahingehende Wege- oder Schaltventile sind im Stand der Technik üblich, sodass an dieser Stelle hierauf nicht mehr näher eingegangen wird. Gemäß der Darstellung nach der Figur ist die jeweilige Ventileinheit 28, 30 in ihrer Sperrstellung gezeigt, bei der jeweils zwei hydraulisch entgegengesetzt wirkende Rückschlagventile 32 eine fluiddichte Absperrung des Federungszylinders 10 gegenüber einer hydraulischen Versorgungseinheit 34 absperren.

Ferner ist vorgesehen, dass die Eingangsseite 36 der Ventileinheit 30, deren Ausgangsseite 38 an die Ringseite 14 des Federungszylinders 10 angeschlossen ist über eine Verbindungsleitung 40 an die Eingangsseite 42 der weiteren Ventileinheit 28 angeschlossen ist, deren Ausgangsseite 44 an die Kolbenseite 12 des zuordenbaren Federungszylinders angeschlossen ist. Die Terminologie Ein- und Ausgänge ist willkürlich und kann sich durch Umkehr der Fluidrichtung entsprechend auch umdrehen, sodass bezogen auf die Fluidströmung eine Ausgangsseite zu einer Eingangsseite und eine Eingangsseite zu einer Ausgangsseite werden kann. Um aber eine Bezugnahme auf die Verschaltung treffen zu können, wurde die vorstehende Terminologie gewählt.

In die Verbindungsleitung 40 zwischen den beiden Ventileinheiten 28, 30 mündet eine Load-Sensing-Leitung LS ein, die als eine Art Steuerleitung ausgebildet den jeweils anstehenden hydraulischen Druck in der Verbindungsleitung 40 abgreifen kann. In Abhängigkeit der sich einstellenden Lastsituation innerhalb der hydropneumatischen Achsfederung steuert die Load-Sensing-Leitung LS dann eine Hydropumpe P an, die vorzugsweise als Load-Sensing-Pumpe ausgebildet ist. Zum Zuschalten der genannte Pumpe P dient eine von der Steuerelektronik 18 ansteuerbare 3/2-Wege-Ventileinheit 46, die gemäß der Darstellung nach der Figur die Load-Sensing-Leitung LS zum Tank T hin drucklos schaltet.

Des Weiteren ist in die Verbindungsleitung 40 zwischen der Einmündung 48 der Load-Sensing-Leitung LS und der jeweiligen Ventileinheit 28, 30 eine Querschnittsverengung 50 in der Art der Blende, Drossel oder Düse vorgesehen.

Mit der aufgezeigten hydraulischen Schaltung nebst Steuerelektronik 18 ist mit wenigen Baukomponenten bei einer realisierten variablen Federung für große Achslasten eine Korrektur des ringseitigen Druckes nur bei Bedarf notwendig, sodass weniger Leckageverluste entstehen, was zu günstigen Leistungsergebnissen führt und zu einem funktionssicheren Aufbau. Die angesprochene Schaltung kommt vom Grundaufbau her nur mit zwei Ventileinheiten 28, 30 aus, was zum einen die Schaltung konstruktiv vereinfacht und kostengünstig werden lässt und darüber hinaus zur Erhöhung der Funktionssicherheit gleichfalls mit beiträgt. Ferner ist keine Anpassung der Hydraulik auf unterschiedliche Ringdrücke notwendig, da diese als ringseitige Drücke erfasst vom Druckwertaufnehmer DA-R unmittelbar als Parameter in die Software "eingestellt" werden. Der Grundaufbau der Schaltung kommt auch ohne Druckwertaufnehmer DA-K für die Kolbenseite 12 aus; beim Einsatz eines dahingehenden Druckwertaufnehmers DA-K ist aber eine lastabhängige Einstellung der Federungscharakteristik zusätzlich möglich. Das aufgezeigte Wegmesssystem s erlaubt die Niveauregulierung für den Gesamtfahrzeugaufbau; wird aber für die eigentliche ringseitige Druckwerterfassung gleichfalls nicht zwingend benötigt.

Der Druck $P_{R0}$ auf der Ringseite 14 des jeweiligen Federungszylinders 10 wird auf der Niveaupositiön der Federung angegeben. Abhängig von den geometrischen Zylinderabmessungen und der Speicherparameter V0 und P0 verändert sich der ringseitige Druck bei Veränderung der Zylinderposition. Wird die Kolbenstangeneinheit 16 des Federungszylinders 10 eingefahren, so wird das notwendige Volumen auf der Ringseite 14 aus dem ringseitigen Speicher 26 entnommen und der ringseitige Druck sinkt. Wird die Kolbenstangeneinheit 16 ausgefahren, so wird das verdrängte Volumen auf der Ringseite 14 vom ringseitigen Speicher 26 aufgenommen und der ringseitige Druck steigt. Die Positionsabhängigkeit des ringseitigen Druckes wird bei der erfindungsgemäßen Lösung beispielsweise über das Wegmeßsystem s erfasst und berücksichtigt. Der ringseitige Druck wird beispielsweise über den Druckaufnehmer DA-R gemessen als $P_{RM}$ und mit dem theoretischen ringseitigen Druck $P_{RS}$ verglichen. Dabei wird der theoretische ringseitige Druck $P_{RS}$ aus den folgenden Parametern ermittelt:

Zylinderringfläche $A_R$
Speichergröße $V_0$
Vorspanndruck $P_0$
ringseitiger Solldruck in Niveaulage $P_{R0}$
Zylinderposition s

Das Gasvolumen auf Niveauposition ermittelt sich dann wie folgt:

$$V_1 \times P_{R0} = V_0 \times P_0$$

Daraus folgt:

$$V_1 = \frac{P_0}{P_{R0}} \times V_0$$

mit

$$\Delta V_{öl} = A_R \times s \implies V_{gas\,s} = V_1 + \Delta V_{öl}$$

$$V_{gas\,s} = V_1 + A_R \times s$$

$$P_{RS} \times V_{gas\,s} = P_{R0} \times V_1$$

$$P_{RS} = P_{R0} \times \frac{V_1}{V_1 + A_R \times s}$$

$$P_{RS} = P_{RM}$$

Ist somit der berechnete Druck $P_{RS}$ gleich dem gemessenen Druck $P_{RM}$, so ist keine weitere Korrektur erforderlich, was mit den bisher üblichen Systemen so nicht darstellbar ist.

**Patentansprüche**

1. Hydropneumatische Achsfederung für Fahrzeuge, insbesondere für deren jeweilige Vorderachse, die mit mindestens einem Federungszylinder (10) zusammenwirkt, der sowohl mit seiner Ringseite (14) als auch mit seiner Kolbenseite (12) an einen Hydrospeicher (26; 24) angeschlossen ist, der mittels einer ihm zuordenbaren Ventileinheit (30; 28) von einer Steuerelektronik (18) ansteuerbar ist, wobei die Ringseite (14) des Federungszylinders (10) an einen Druckwertaufnehmer (DA-R) angeschlossen ist, der seine Druckmesswerte an die Steuerelektronik (78) weitergibt, wobei der ringseitige Druckwertaufnehmer (DA-R) an die Ausgangsseite (38) der Ventileinheit (30) angeschlossen ist, die der Ringseite (14) des Federungszylinders (10) zuordenbar und an die Ringseite (14) des Federungszylinders (10) angeschlossen ist, und wobei die Ausgangsseite (44) der weiteren Ventileinheit (28) an die Kolbenseite (12) des zuordenbaren Federungszylinders (10) angeschlossen ist, **dadurch gekennzeichnet, dass** die Eingangsseite (36) der Ventileinheit (30) über eine Verbindungsleitung (40) an die Eingangsseite (42) der weiteren Ventileinheit (28) angeschlossen ist und dass in die verbindungsleitung (40) zwischen die beiden Ventileinheiten (28,30) eine Load-Sensing-Leitung (LS) einmündet.

2. Hydropneumatische Achsfederung nach Anspruch 1, **dadurch gekennzeichnet, dass** die Verbindungsleitung (40) zwischen der Einmündung (48) der Load-Sensing-Leitung (LS) und der jeweiligen Ventileinheit (30) eine Querschnittsverengung (50) aufweist.

3. Hydropneumatische Achsfederung nach Anspruch 1 oder 2, **dadurch gekennzeichnet, dass** die jeweilige Ventileinheit (28, 30) aus einem 2/2-Wege-Ventil mit gegenläufig hydraulisch entsperrbaren Rückschlagventilen (32) besteht.

4. Hydropneumatische Achsfederung nach einem der Ansprüche 1 bis 3, **dadurch gekennzeichnet, dass** auch die Kolbenseite (12) des Federungszylinders (10) an einen Druckwertaufnehmer (DA-K) angeschlossen ist, der seine Druckmesswerte an die Steuerelektronik (18) weitergibt.

5. Hydropneumatische Achsfederung nach einem der Ansprüche 1 bis 4, **dadurch gekennzeichnet, dass** die Position der Kolbenstangeneinheit (16) des Federungszylinders (10) mittels eines Wegmesssystems (s) erfassbar und an die Steuerelektronik (18) weiterleitbar ist.

**Claims**

1. A hydropneumatic axle suspension for vehicles, in particular for the respective front axle of the latter, which co-operates with at least one suspension cylinder (10) which is connected both with its annulus side (14) and with its piston side (12) to a hydraulic accumulator (26; 24) which can be controlled by control electronics (18) by means of a valve unit (30; 28) assignable to it, the annulus side (14) of the suspension cylinder (10) being connected to a pressure value sensor (DA-R) which passes on its pressure measurements to the control electronics (18), the annulus side pressure value sensor (DA-R) being connected to the output side (38) of the valve unit (30) which is assignable to the annulus side (14) of the suspension cylinder (10) and is connected to the annulus side (14) of the suspension cylinder (10), and the output side (44) of the further valve unit (28) being connected to the piston side (12) of the assignable suspension cylinder (10), **characterised in that** the input side (36) of the valve unit (30) is connected by means of a connection line (40) to the input side (42) of the further valve unit (28), and that a load-sensing line (LS) opens out into the connection line (40) between the two valve units (28, 30).

2. The hydropneumatic axle suspension according to Claim 1, **characterised in that** the connection line (40) has between the intersection (48) of the load-sensing line (LS) and the respective valve unit (30) a cross-sectional narrowing (50).

3. The hydropneumatic axle suspension according to Claim 1 or 2, **characterised in that** the respective valve unit (28, 30) comprises a 2/2-way valve with opposing hydraulically releaseable return valves (32).

4. The hydropneumatic axle suspension according to any of Claims 1 to 3, **characterised in that** the piston side (12) of the suspension cylinder (10) is also connected to a pressure value sensor (DA-K) which passes on its pressure measurements to the control electronics (18).

5. The hydropneumatic axle suspension according to any of Claims 1 to 4, **characterised in that** the position of the piston rod unit (16) of the suspension cylinder (10) can be recorded by means of a path measuring system (s) and be relayed to the control electronics (18).

**Revendications**

1. Suspension hydropneumatique de l'essieu de véhicules automobiles, notamment pour leurs essieux avant respectifs, qui coopère avec au moins un cylindre (10) de suspension relié à un accumulateur (26, 24) hydraulique à la fois par son côté (14) annulaire et par son côté (12) de piston, accumulateur hydraulique qui peut être commandé par une électronique (18) de commande, au moyen d'une unité (30, 28) de vanne qui peut lui être associée, dans laquelle le côté (14) annulaire du cylindre (10) de suspension est raccordé à un enregistreur (DA-R) de valeur de pression, qui achemine ses valeurs de mesure de pression à l'électronique (18) de commande, l'enregistreur (DA-R) de valeur de pression du côté annulaire étant raccordé au côté (38) de sortie de l'unité (30) de vanne, unité qui peut être associée au côté (14) annulaire du cylindre (10) de suspension et qui est raccordée au côté (14) annulaire du cylindre (10) de suspension, et dans laquelle le côté (44) de sortie de l'autre unité (28) de vanne est raccordé au côté (12) de piston du cylindre (10) de suspension qui peut être associé, **caractérisé en ce que** le côté (36) d'entrée de l'unité (30) de vanne est raccordé par une conduite (40) de liaison au côté (42) d'entrée de l'autre unité (28) de vanne et **en ce qu'**un conduit (LS) load-sensing débouche dans le conduit (40) de liaison entre les deux unités 28, 30) de vanne.

2. Suspension hydropneumatique de l'essieu suivant la revendication 1,
**caractérisée en ce que** le conduit (40) de liaison a un rétrécissement (50) de la section transversale entre l'embouchure (48) du conduit (LS) load-sensing et l'unité (30) de vanne respective.

3. Suspension hydropneumatique de l'essieu suivant la revendication 1 ou 2,
**caractérisée en ce que** l'unité (28, 30) de vanne respective est constituée d'une vanne à 2/2 voies ayant des clapets (32) anti-retour pouvant être débloqués hydrauliquement en sens opposé.

4. Suspension hydropneumatique de l'essieu suivant l'une des revendications 1 à 3,
**caractérisée en ce que** le côté (12) du piston du cylindre (10) de suspension est raccordé aussi à un enregistreur (DA-K) de valeur de pression, qui achemine ses valeurs de mesure de pression vers l'électronique (18) de commande.

5. Suspension hydropneumatique de l'essieu suivant l'une des revendications 1 à 4,
**caractérisée en ce que** la position de l'unité (16) de tige de piston du cylindre (10) de suspension peut être détectée au moyen d'un système (s) de mesure de trajet et être acheminée vers l'électronique (18) de commande.

Elektronik

DA-K

DA-R

EP 1 963 118 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10232769 A1
- EP 1508461 A